# EUROPÄISCHE PATENTSCHRIFT

(11) **EP 2 718 345 B1**
(45) Veröffentlichungstag und Bekanntmachung des Hinweises auf die Patenterteilung: **24.07.2019**
(21) Anmeldenummer: 12725466.2
(22) Anmeldetag: 05.06.2012
(51) Int. Cl.: C08G 18/40, C08G 18/63, C08G 18/71, C08L 71/02

(54) **POLYURETHAN-POLYMERE**
POLYURETHANE POLYMERS
POLYMÈRES DE POLYURÉTHANE

(30) Priorität: 08.06.2011 DE 102011077213
(43) Veröffentlichungstag der Anmeldung: 16.04.2014
(73) Patentinhaber: Covestro Deutschland AG, 51373 Leverkusen (DE)
(72) Erfinder: PEIFFER, Evelyn, 51375 Leverkusen (DE); MATNER, Mathias, 41464 Neuss (DE)
(74) Vertreter: Levpat
(86) Internationale Anmeldenummer: PCT/EP2012/060592
(87) Internationale Veröffentlichungsnummer: WO 2012/168236

(56) Entgegenhaltungen:
- EP-A1- 0 732 348
- EP-A1- 1 995 261

## Beschreibung

Die vorliegende Erfindung betrifft nicht-wässrige Polyurethan-Polymere, ein Verfahren zu ihrer Herstellung und ihre Anwendung als Bindemittel für Klebstoffe, Beschichtungen oder Schäume.

Alkoxysilanfunktionelle Polyurethane, die über eine Silanpolykondensation vernetzen, sind seit langem bekannt. Ein Übersichtsartikel zu dieser Thematik findet sich z.B. in "Adhesives Age" 4/1995, Seite 30 ff. (Autoren: Ta-Min Feng, B. A. Waldmann). Derartige alkoxysilanterminierte, feuchtigkeitshärtende Einkomponenten-Polyurethane werden in zunehmendem Maße als weichelastische Beschichtungs-, Dichtungs- und Klebmassen im Bauwesen und in der Automobilindustrie verwendet.

Solche alkoxysilanfunktionellen Polyurethane können gemäß US-A 3,627,722 oder DE-A 1 745 526 hergestellt werden, indem z.B. Polyetherpolyole mit einem Überschuss Polyisocyanat zu einem NCO-haltigen Prepolymer umgesetzt werden, das dann wiederum mit einem aminofunktionellen Alkoxysilan weiter umgesetzt wird.

Die EP-A 397 036, DE-A 19 908 562 (entspr. EP-A 1 093 482) und US-A 2002/0100550 beschreiben weitere unterschiedliche Wege zur Herstellung von alkoxysilanterminierten Polymeren. Gemäß dieser Schriften werden jeweils hochmolekulare Polyether mit einem durchschnittlichen Molekulargewicht von 4000g/mol oder größer eingesetzt.

Die EP-A 0 070 475 beschreibt die Herstellung und Verwendung von alkoxysilanterminierten Polymeren ausgehend von Wasserstoff aciden Prepolymeren durch Terminierung mit NCO-funktionellen Alkoxysilanen. Zur Prepolymersynthese werden Polyole mit einem Molgewicht von 500 - 6000 g/mol verwendet. Die darin beschriebenen Polymere werden als Bindemittel in Dichtstoffformulierungen, also weichelastischen Systemen, eingesetzt.

Ein analoges Verfahren wird in der Anmeldung DE-A 10 2007 058 344 beschrieben.

Die Möglichkeit, durch die Verwendung von isocyanatfunktionellen Alkoxysilanbausteinen zu besonders niedrigviskosen Prepolymeren zu gelangen wird u.a. in der US-A 4,345,053 offenbart. Hier wird ein OH-funktionelles Prepolymer durch ein isocyanatfunktionelles Alkoxysilan terminiert, was letztlich die Einsparung einer Harnstoff-Gruppe pro Terminierung bedeutet. Allerdings enthält das OH-funktionelle Prepolymer noch Urethangruppen, die aus der Vorverlängerung eines Polyetherpolyols mit Diisocyanat resultieren. Diese können, wie ebenfalls in EP-A 0 372 561 offenbart, eingespart werden, indem speziell hergestellte langkettige Polyether mit einer geringen Unsättigung und Polydispersität eingesetzt werden. Allerdings werden bei der stöchiometrischen Umsetzung solcher isocyanatfunktionellen Alkoxysilanbausteine Bindemittel erhalten, die aufgrund unzureichender Verkappung vor allem bei der Verwendung sehr langkettiger Polyether bei der Aushärtung nicht ausreichend vernetzen können. Dies führt zu sehr weichen Polymeren mit einer hohen Oberflächenklebrigkeit und einem mangelnden Rückstellvermögen, bzw. einer hohen plastischen Deformierbarkeit.

Die EP-A 1 924621 (entspr. WO2007025668) beschreibt die Herstellung und Verwendung von alkoxysilanterminierten Polymeren ausgehend von Polyetherpolyolen durch Terminierung mit NCO-funktionellen Alkoxysilanen. Zur Synthese werden Polyole mit einem Molgewicht von 3000 - 20000 g/mol verwendet. Die darin beschriebenen Polymere werden als Bindemittel in Dichtstoffformulierungen, also weichelastischen Systemen, eingesetzt.

Alle diese alkoxysilanterminierten Systeme bilden nach der Aushärtung weichelastische Polymere mit einer relativ geringen Festigkeit und einer hohen Bruchdehnung. Die DE-A 1 745 526 beschreibt für Polyoxypropylenglykol-basierte Polymere Zugfestigkeiten im Bereich von 3,36 kg/cm² bis 28,7 kg/cm². Nur mit kristallisierenden Polycaprolactonen werden hohe Festigkeiten erreicht, die für strukturelle Klebungen ausreichend sind.

Diese Systeme weisen aber den Nachteil auf, dass sie bei Raumtemperatur sehr hochviskos oder sogar fest sind und daher nur warm verarbeitet werden können.

Dementsprechend ist der Anwendungbereich der oben genannten Anmeldungen einerseits auf Dichtstoffe und weichelastische Klebstoffe, andererseits auf hochviskose oder feste Systeme, die nur warm verarbeitet werden können, beschränkt.

Das Dokument EP 0 732 348 A1 offenbart Alkoxysilangruppen aufweisende Prepolymere und ihre Anwendung als Bindemittel für Klebstoffe, Primer oder Beschichtungen. Im Beispiel 2 wird zuerst ein Acrylpolymer in Polypropylenglykol eindispergiert. Dann wird das Isocyanatopropyltriethoxysilan mit dem Acrylpolymer enthaltenden Polypropylenglykol zur Reaktion gebracht. Im Beispiel 4 wird die Verwendung des erzeugten Polymeres als Klebstoff offenbart.

Der vorliegenden Erfindung lag daher die Aufgabe zugrunde, nicht-wässrige, bei Raumtemperatur flüssige, alkoxysilanterminierte Polymere zur Verfügung zu stellen, die ausgehärtet eine hohe Kohäsionsfestigkeit erreichen, so dass mit ihnen Klebstoffe formuliert werden können, die strukturelles Kleben ermöglichen.

Es wurde nun gefunden, dass sich derartige alkoxysilanterminierte Polymere mit den geforderten Eigenschaften herstellen lassen, indem man Polymerpolyole mit darin dispergierten organischen Füllstoffen verwendet und diese mit einem isocyanatfunktionellen Alkoxysilan umsetzt. Gegenstand der Erfindung sind daher mit Alkoxysilangruppen modifizierte Polymere, die durch Umsetzung
a) von Polymerpolyolen oder Mischungen von Polymerpolyolen, die mindestens 5 Gew.-% darin dispergierten organischen Füllstoff enthalten, bei welchem es sich um Additionsprodukte von Toluylendiisocyanat mit Hydrazinhydrat (PHD) oder Copolymerisate von Styrol und Acrylnitril (SAN) handelt mit
b) einer isocyanatfunktionellen Alkoxysilanverbindung der allgemeinen Formel (I): 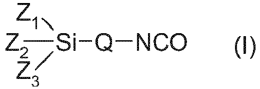
worin
- Z¹, Z² und Z³: gleiche oder verschiedene C₁-C₈-Alkoxy- oder C₁-C₈-Alkylreste sind, die auch verbrückt sein können, wobei aber an jedem Si-Atom mindestens ein C₁-C₈-Alkoxyrest vorhanden sein muss,
- Q: ein wenigstens difunktioneller linearer oder verzweigter organischer Rest ist, bevorzugt ein Alkylenradikal mit 1 bis 8 Kohlenstoffatomen,
erhältlich sind, die bei 23 °C eine Viskosität von kleiner 20 Pa.s aufweisen.

Dabei kann die Umsetzung von b) mit a) vorzugsweise in einem Verhältnis von 0,8 : 1,0 bis zu 1,5 : 1,0 (NCO : isocyanatreaktivem Wasserstoff) erfolgen.

Die erfindungsgemäßen Verbindungen sind nicht kristallisierende, bei Raumtemperatur flüssige Stoffe.

Als Teil a) können alle dem Fachmann bekannten Polymerpolyole mit darin dispergierten organischen Füllstoffen verwendet werden. Solche Polymerpolyole können sowohl Polyester- als auch Polyetherpolyole sein. Bevorzugt werden Polyetherpolyole mit darin dispergierten organischen Füllstoffen, wie beispielsweise Additionsprodukten von Toluylendiisocyanat mit Hydrazinhydrat (PHD) wie in DE-A 2 638 759, US-A 4,089,835 oder US-A 4,260,530 beschrieben oder Copolymerisaten von Styrol und Acrylnitril (SAN), wie in US-B 7,179,882, EP-A 0 008 444 oder US-A 4,895,878 beschrieben, eingesetzt. Polyesterpolyole mit darin dispergierten organischen Füllstoffen werden in EP-A 1 505 082, EP-A 1 541 606, EP-A 1 671 994, EP-A 0 250 351, US-A 3,294,711 beschrieben.

Teil a) enthält mindestens 5 Gew.% dispergierten organischen Füllstoff, bevorzugt mindestens 10 Gew. % dispergierten organischen Füllstoff, besonders bevorzugt mindestens 20 Gew. % dispergierten organischen Füllstoff.

Anteilig können in Teil a) neben den Polymerpolyolen mit darin dispergierten organischen Füllstoffen, auch alle dem Fachmann bekannten Verbindungen mit isocyanatreaktiven Gruppen eingesetzt werden. Dies können beispielsweise niedermolekulare, multifunktionelle isocyanatreaktive Verbindungen wie aliphatische Polyole, Polythiole oder Polyamine, aromatische Polyole, Polythiole oder Polyamine sein oder höhermolekulare isocyanatreaktive Verbindungen wie Polyetherpolyole, Polyetheramine, Polycarbonatpolyole, Polyesterpolyole sowie Polythioetherpolyole sein. Bevorzugt weisen solche isocyanatreaktiven Verbindungen eine mittlere Funktionalität von 1 bis 6, bevorzugt 2 bis 3,5 und besonders bevorzugt von 2 bis 3 auf.

Vorzugsweise weist Teil a) im Mittel eine Funktionalität von mindestens 2,0 auf.

Alternativ können in Teil a), gegebenenfalls auch anteilig, isocyanatreaktive Polyurethanpolymere eingesetzt werden, wie sie beispielsweise in EP-A 0 070 475, und DE-A 10 2007 058 344 beschrieben sind.

Als isocyanatfunktionelle Alkoxysilanverbindungen der allgemeinen Formel (I) sind grundsätzlich alle alkoxysilangruppenhaltigen Monoisocyanate mit einem Molekulargewicht von 140 g/mol bis 500 g/mol geeignet. Beispiele für solche Verbindungen sind Isocyanatomethyltrimethoxysilan, Isocyanatomethyltriethoxysilan, (Isocyanatomethyl)methyldimethoxysilan, (Isocyanatomethyl)-methyldiethoxysilan, 3-Isocyanatopropyltrimethoxysilan, 3-Isocyanatopropylmethyl-dimethoxysilan, 3-Isocyanatopropyltriethoxysilan und 3-Isocyanatopropylmethyldiethoxysilan. Bevorzugt ist hier die Verwendung von 3-Isocyanatopropyltrimethoxysilan.

Es ist erfindungsgemäß auch möglich, isocyanatfunktionelle Silane zu verwenden, die durch Umsetzung eines Diisocyanates mit einem Amino- oder Thiosilan hergestellt wurden, wie sie in der US-A 4,146,585 oder der EP-A 1 136 495 beschrieben werden.

Die Umsetzung von b) mit a) erfogt vorzugsweise in einem Verhältnis von 0,8 : 1,0 bis zu 1,5 : 1,0 (NCO : isocyanatreaktivem Wasserstoff) erfolgen, besonders bevorzugt in einem Verhältnis von 1,0 : 1,0 bis 1,5 : 1,0, ganz besonders bevorzugt in einem Verhältnis von 1,0 : 1,0 bis 1,2 : 1,0. Bevorzugt wird das Isocyanat equimolar oder im Überschuss eingesetzt, so dass die resultierenden erfindungsgemäßen Polymere vollständig alkoxysilanterminiert sind. Erforderlichenfalls ist das für eine spezifische Stoffkombination von b) und a) optimale Verhältnis durch orientierende Vorversuche zu ermitteln, was eine für den Fachmann übliche Vorgehensweise ist.

Werden die Mengenverhältnisse so gewählt, dass nach erfolgter Umsetzung von a) mit b) freie NCO-Gruppen übrigbleiben, so können diese anschließend durch Reaktion mit gegenüber Isocyanaten reaktiven Verbindungen oder durch Allophanatisierung abgefangen werden, wie beispielsweise in EP-A 1 924 621 beschrieben.

Die Umsetzung Teil a) mit Teil b) erfolgt bevorzugt in einem Temperaturbereich von 20 °C bis 200 °C, besonders bevorzugt innerhalb von 40 °C bis 120 °C und besonders bevorzugt von 60 °C bis 100 °C.

Diese Umsetzung kann durch Katalyse beschleunigt werden. Zur Beschleunigung kommen dem Fachmann an sich bekannte Urethanisierungskatalysatoren wie Organozinnverbindungen oder aminische Katalysatoren in Frage. Als Organozinnverbindungen seien beispielhaft genannt: Dibutylzinndiacetat, Dibutylzinndilaurat, Dioctylzinndilaurat, Dibutylzinn-bis-acetoacetonat und Zinncarboxylate wie beispielsweise Zinnoctoat. Die genannten Zinnkatalysatoren können gegebenenfalls in Kombination mit aminischen Katalysatoren wie Aminosilanen oder 1,4-Diazabicyclo-[2.2.2]octan verwendet werden.

Besonders bevorzugt wird Dibutylzinndilaurat als Katalysator eingesetzt.

Die Reaktion wird fortgeführt, bis ein vollständiger Umsatz der isocyanatreaktiven Gruppen erreicht ist. Der Verlauf der Reaktion wird sinnvollerweise durch die Überprüfung des NCO-Gehaltes überwacht und ist beendet, wenn der NCO-Gehalt auf < 1 Gew.-% gefallen ist. Dies kann durch geeignete im Reaktionsgefäß installierte Messgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehaltes, des Brechungsindex, des OH-Gehalts, Gaschromatographie (GC), kernmagnetische Resonanzspektroskopie (NMR), Infrarotspektroskopie (IR) und nahe Nahinfrarotspektroskopie (NIR). Vorzugsweise wird der NCO-Gehalt der Mischung titrimetrisch bestimmt.

Es ist unerheblich, ob das Verfahren kontinuierlich z.B. in einem Statik-Mischer, Extruder oder Kneter oder diskontinuierlich z.B. in einem Rührreaktor durchgeführt wird.

Bevorzugt wird das Verfahren in einem Rührreaktor durchgeführt.

Ein weiterer Gegenstand der Erfindung sind Klebstoffe, Beschichtungen oder Schäume basierend auf den erfindungsgemäßen Polymeren. Diese Klebstoffe, Beschichtungen oder Schäume vernetzen unter Einwirkung von Luftfeuchtigkeit über eine Silanolpolykondensation. Bevorzugt ist der Einsatz der erfindungsgemäßen Polymere in Schäumen und Klebstoffen, besonders bevorzugt in Klebstoffen, die nach der im experimentellen Teil beschriebenen Messmethode eine Zugscherfestigkeit von mindestens 10 N/mm² aufweisen.

Zur Herstellung solcher Klebstoffe, Beschichtungen und Schäume können die erfindungsgemäßen Alkoxysilan-Endgruppen aufweisenden Polymere zusammen mit üblichen Lösemitteln, Treibmitteln, Weichmachern, Füllstoffen, Pigmenten, Flammschutzmitteln, Trockenmitteln, Additiven, Lichtschutzmitteln, Antioxidantien, Thixotropiermitteln, Katalysatoren, Haftvermittlern und gegebenenfalls weiteren Hilfs- und Zusatzstoffen nach bekannten Verfahren formuliert werden.

Typische erfindungsgemäße Schäume, Klebstoff- und Beschichtungszubereitungen enthalten beispielsweise 5 Gew.-% bis 100 Gew.-% eines mit Alkoxysilangruppen modifizierten Polymers nach Anspruch 1 oder eines Gemisches aus zwei oder mehreren solcher mit Alkoxysilangruppen modifizierten Polymere, bis zu 50 Gew.-% eines Weichmachers/Flammschutzmittels oder eines Gemisches aus zwei oder mehreren Weichmachern/Flammschutzmitteln, bis zu 95 Gew.-% eines Löse-/Treibmittels oder eines Gemisches aus zwei oder mehreren Löse-/Treibmitteln, bis zu 20 Gew.-% eines Feuchtigkeits-Stabilisators oder eines Gemisches aus zwei oder mehreren Feuchtigkeits-Stabilisatoren, bis zu 5 Gew.-% eines oder mehrerer Alterungsschutzmittel, bis zu 5 Gew.-% eines Katalysators oder eines Gemisches aus zwei oder mehreren Katalysatoren und bis 80 Gew.-% eines Füllstoffs oder eines Gemisches aus zwei oder mehreren Füllstoffen.

Als geeignete Weichmacher seien beispielhaft Phthalsäureester, Adipinsäureester, Alkylsulfonsäureester des Phenols, Phosphorsäureester oder auch höhermolekulare Polypropylenglykole genannt.

Als Flammschutzmittel können die typischen halogen- oder phosphorhaltigen Verbindungen eingesetzt werden, ebenso anorganische Flammschutzmittel wie beispielsweise Aluminiumoxidhydrat.

Als Treibmittel kann im einfachsten Falle Luft oder Stickstoff eingesetzt werden, jedoch können selbstverständlich auch alle anderen, aus der Polyurethanchemie an sich bekannten, Treibmittel zum Aufschäumen der erfindungsgemäßen Zusammensetzung eingesetzt werden. Genannt seien beispielsweise *n*-Butan, *i*-Butan, Propan und Dimethylether, sowie Mischungen der vorgenannten.

Als Trockenmittel seien insbesondere Alkoxysilylverbindungen genannt wie Vinyltrimethoxysilan, Methyltrimethoxysilan, *i*-Putyltrimethoxysilan, Hexadecyltrimethoxysilan.

Als geeignete Füllstoffe seien beispielhaft Ruß, Fällungskieselsäuren, pyrogene Kieselsäuren, mineralische Kreiden und Fällungskreiden oder auch faserige Füllstoffe genannt.

Als Thixotropiermittel seien beispielhaft pyrogene Kieselsäuren, Polyamide, hydrierte Rizinusöl-Folgeprodukte oder auch Polyvinylchlorid genannt.

Als geeignete Katalysatoren zur Aushärtung der erfindungsgemäßen Klebstoffe, Beschichtungen oder Schäume können alle metallorganischen Verbindungen und aminischen Katalysatoren eingesetzt werden, die bekanntermaßen die Silanpolykondensation fördern. Besonders geeignete metallorganische Verbindungen sind insbesondere Verbindungen des Zinns und des Titans. Bevorzugte Zinnverbindungen sind beispielsweise: Dibutylzinndiacetat, Dibutylzinndilaurat, Dioctylzinnmaleat und Zinncarboxylate wie beispielsweise Zinn(II)octoat oder Dibutylzinn-bis-acetoacetonat. Die genannten Zinnkatalysatoren können gegebenenfalls in Kombination mit aminischen Katalysatoren wie Aminosilanen oder 1,4-Diazabicyclo[2.2.2]octan verwendet werden. Bevorzugte Titanverbindungen sind beispielsweise Alkyltitanate, wie Diisobutyl-bisacetessigsäureethylester-titanat. Für die alleinige Verwendung von aminischen Katalysatoren sind insbesondere solche geeignet, die eine besonders hohe Basenstärke aufweisen, wie Amine mit Amidin-Struktur. Bevorzugte aminische Katalysatoren sind daher beispielsweise 1,8-Diazabicyclo[5.4.0]undec-7-en oder 1,5-Diazabicyclo[4.3.0]non-5-en. Auch Brönstedtsäuren können die Silankondensation katalysieren. Es können alle Säuren eingesetzt werden, die mit der jeweiligen Formulierung kompatibel sind. Beispielhaft sind hier p-Toluolsulfonsäure, Dodecylbenzolsulfonsäure oder auch Zitronensäure genannt.

Als Haftvermittler werden die bekannten funktionellen Silane eingesetzt wie beispielsweise Aminosilane der vorstehend genannten Art aber auch N-Aminoethyl-3-aminopropyl-trimethoxy und/oder N-Aminoethyl-3-aminopropyl-methyl-dimethoxysilan, Epoxysilane und/oder Mercaptosilane.

Die nachfolgenden Beispiele veranschaulichen die vorliegende Erfindung, ohne sie zu beschränken.

### Beispiele

Alle Prozentangaben beziehen sich, sofern nicht abweichend angegeben, auf Gewichtsprozent (Gew.-%).

Die zur Zeit der Versuchsdurchführung herrschende Umgebungstemperatur von 23 °C wird als RT (Raumtemperatur) bezeichnet.

Die nachstehend aufgeführten Methoden zur Bestimmung der entsprechenden Parameter wurden zur Durchführung bzw. Auswertung der Beispiele angewendet und sind auch die Methoden zur Bestimmung der erfindungsgemäß relevanten Parameter im allgemeinen.

### Bestimmung des Isocyanatgehalts

Die Bestimmung der NCO-Gehalte in Gew.-% wurde gemäß DIN EN ISO 11909 durch Rücktitration mit 0,1 mol/l Salzsäure nach Reaktion mit Butylamin vorgenommen.

### Bestimmung der Viskosität

Die Viskositätsmessungen wurden nach ISO/DIN 3219:1990 bei einer konstanten Temperatur von 23 °C und einer konstanten Scherrate von 250/sec mit einem Platte-Kegel Rotationsviskosimeter des Typs Physica MCR (Fa. Anton Paar Germany GmbH, Ostfildern, DE) unter Verwendung des Messkegels CP 25-1 (25mm Durchmesser , 1° Kegelwinkel) durchgeführt.

### Beispiel 1 (erfindungsgemäß):

In einem 2L-Sulfierbecher mit Deckel, Rührer, Thermometer und Stickstoffdurchfluss wurden 732,3 g Polypropylenglykol mit einer Hydroxylzahl von 89 mg KOH/g mit 20 Gew.-% eindispergiertem SAN und 0,05 g Dibutylzinndilaurat (Desmorapid® Z, Bayer MaterialScience AG) auf 60 °C erwärmt. Anschließend wurden bei 60 °C 267,8 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polyurethanpolymer hatte eine Viskosität von 1200 mPas (23 °C).

### Beispiel 2 (erfindungsgemäß):

In einem 2L-Sulfierbecher mit Deckel, Rührer, Thermometer und Stickstoffdurchfluss wurden 904,5 g Polyethertriol aufgebaut aus Propylenoxid und Ethylenoxid (12 Gew.-%) mit einer Hydroxylzahl von 28,2 mg KOH/g mit 45 Gew.-% eindispergiertem SAN und 0,05 g Dibutylzinndilaurat (Desmorapid® Z, Bayer MaterialScience AG) auf 60 °C erwärmt. Anschließend wurden bei 60 °C 95,6 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polyurethanpolymer hatte eine Viskosität von 12550 mPas (23 °C).

### Beispiel 3 (erfindungsgemäß):

In einem 2L-Sulfierbecher mit Deckel, Rührer, Thermometer und Stickstoffdurchfluss wurden 902,3 g Polyethertriol aufgebaut aus Propylenoxid und Ethylenoxid (13 Gew.-%) mit einer Hydroxylzahl von 29 mg KOH/g mit 20 Gew.-% eindispergiertem SAN und 0,05 g Dibutylzinndilaurat (Desmorapid® Z, Bayer MaterialScience AG) auf 60 °C erwärmt. Anschließend wurden bei 60 °C 97,7 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polyurethanpolymer hatte eine Viskosität von 6200 mPas (23 °C).

### Beispiel 4 (erfindungsgemäß):

In einem 2L-Sulfierbecher mit Deckel, Rührer, Thermometer und Stickstoffdurchfluss wurden 902,3 g Polyethertriol aufgebaut aus Propylenoxid und Ethylenoxid (13 Gew.-%) mit einer Hydroxylzahl von 28,5 mg KOH/g mit 20 Gew.-% eindispergiertem PHD und 0,05 g Dibutylzinndilaurat (Desmorapid® Z, Bayer MaterialScience AG) auf 60 °C erwärmt. Anschließend wurden bei 60 °C 97,7 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polyurethanpolymer hatte eine Viskosität von 12500 mPas (23 °C).

### Beispiel 5 (erfindungsgemäß):

In einem 2L-Sulfierbecher mit Deckel, Rührer, Thermometer und Stickstoffdurchfluss wurden 841,2 g Ethylendiamin gestartetes Polyethertetrol aufgebaut aus Propylenoxid mit einer Hydroxylzahl von 50,2 mg KOH/g mit 20 Gew.-% eindispergiertem SAN und 0,05 g Dibutylzinndilaurat (Desmorapid® Z, Bayer MaterialScience AG) auf 60 °C erwärmt. Anschließend wurden bei 60 °C 158,8 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polyurethanpolymer hatte eine Viskosität von 4700 mPas (23 °C).

### Beispiel 6 (erfindungsgemäß):

In einem 2L-Sulfierbecher mit Deckel, Rührer, Thermometer und Stickstoffdurchfluss wurden 692,5 g Triethanolamin gestartetes Polyethertriol aufgebaut aus Propylenoxid mit einer Hydroxylzahl von 119 mg KOH/g mit 20 Gew.-% eindispergiertem SAN und 0,05 g Dibutylzinndilaurat (Desmorapid® Z, Bayer MaterialScience AG) auf 60 °C erwärmt. Anschließend wurden bei 60 °C 307,5 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polyurethanpolymer hatte eine Viskosität von 2900 mPas (23 °C).

### Beispiel 7 (erfindungsgemäß):

In einem 2L-Sulfierbecher mit Deckel, Rührer, Thermometer und Stickstoffdurchfluss wurde eine Mischung von 500,0 g Polypropylenglykol mit einer Hydroxylzahl von 112 mg KOH/g, 500,0 g Polyethertriol aufgebaut aus Propylenoxid und Ethylenoxid (12 Gew.-%) mit einer Hydroxylzahl von 28,2 mg KOH/g mit 45 Gew.-% eindispergiertem SAN und 0,03 g Dibutylzinndilaurat (Desmorapid® Z, Bayer MaterialScience AG) auf 60 °C erwärmt. Anschließend wurden bei 60 °C 263,8 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polyurethanpolymer hatte eine Viskosität von 1900 mPas (23 °C).

### Beispiel 8 (erfindungsgemäß):

In einem 5L-Sulfierbecher mit Deckel, Rührer, Thermometer und Stickstoffdurchfluss wurde eine Mischung von 1227,9 g Polypropylenglykol mit einer Hydroxylzahl von 112 mg KOH/g, 1227,9 g Polyethertriol aufgebaut aus Propylenoxid und Ethylenoxid (12 Gew.-%) mit einer Hydroxylzahl von 28,2 mg KOH/g mit 45 Gew.-% eindispergiertem SAN und 0,09 g Dibutylzinndilaurat (Desmorapid® Z, Bayer MaterialScience AG) auf 60 °C erwärmt. Nach Zugabe von 130,5 g Hexamethylendiisocyanat (Desmodur® H, Bayer MaterialScience AG) wurde bei 60 °C gerührt, bis titrimetrisch kein NCO-Gehalt mehr nachzuweisen war. Anschließend wurden bei 60 °C 392,4 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polyurethanpolymer hatte eine Viskosität von 13800 mPas (23 °C).

### Vergleichsbeispiel 1

In einem 3L-Sulfierbecher mit Deckel, Rührer, Thermometer und Stickstoffdurchfluss wurden 2070,3 g Polyethertriol aufgebaut aus Propylenoxid und Ethylenoxid (13 Gew.-%) mit einer Hydroxylzahl von 56 mg KOH/g und 0,07 g Dibutylzinndilaurat (Desmorapid® Z, Bayer MaterialScience AG) auf 60 °C erwärmt. Anschließend wurden bei 60 °C 409,2 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polyurethanpolymer hatte eine Viskosität von 1900 mPas (23 °C).

### Vergleichsbeispiel 2:

In einem 4L-Sulfierbecher mit Deckel, Rührer, Thermometer und Stickstoffdurchfluss wurden 2651,7 g Polyethertriol aufgebaut aus Propylenoxid und Ethylenoxid (18 Gew.-%) mit einer Hydroxylzahl von 35 mg KOH/g und 0,09 g Dibutylzinndilaurat (Desmorapid® Z, Bayer MaterialScience AG) auf 60 °C erwärmt. Anschließend wurden bei 60 °C 353,2 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polyurethanpolymer hatte eine Viskosität von 2100 mPas (23 °C).

### Anwendungstechnische Beispiele

Zur Beurteilung der anwendungstechnischen Eigenschaften der verschiedenen Polymere wurden diese in folgender Formulierung verarbeitet:

| | **Einsatzmenge in Gew.%** |
|---|---|
| Polymer | 46,06 |
| Füllstoff (Socal® U₁S₂) | 49,75 |
| Trocknungsmittel (Dynasylan® VTMO) | 2,76 |
| Haftvermittler (Dynasylan® 1146) | 1,38 |
| Katalysator (Lupragen® N700) | 0,05 |

Zur Herstellung der Formulierung wird als Bindemittel das Polymer mit dem Füllstoff (Socal® U1S2; Fa. Solvay GmbH) und dem Trocknungsmittel (Dynasylan® VTMO; Fa. Evonik AG) versetzt und in einem Vakuumdissolver mit Wandabstreifer bei 3000U/min vermischt. Anschließend wird der Haftvermittler (Dynasylan® 1146; Fa. Evonik AG) hinzugefügt und innerhalb von 5 min bei 1000 U/min untergerührt. Zuletzt wird der Katalysator (Lupragen® N700; Fa. BASF SE) bei 1000 U/min eingerührt und abschließend die fertige Mischung im Vakuum entlüftet.

### Bestimmung der Hautbildezeit

Mittels eines Rakels (200 µm) wird ein Film des Klebstoffs auf eine vorher mit Ethylacetat gereinigte Glasplatte aufgetragen und sofort in den Drying Recorder eingelegt. Die Nadel wird mit 10 g belastet und bewegt sich über eine Zeitraum von 24 Stunden über eine Strecke von 35 cm.

Der Drying Recorder befindet sich in einem Klimaraum bei 23 °C und 50 % rel. Luftfeuchte.

Als Hautbildezeit wird der Zeitpunkt des Verschwindens der permanenten Spur der Nadel aus dem Film angegeben.

Die Hautbildezeit wurde 1 Tag nach Herstellung der entsprechenden Formulierung bestimmt.

### Bestimmung der Zugscherfestigkeit

Zur Bestimmung der Zugscherfestigkeit werden einfach überlappte Prüfkörper aus Buche mit einer Überlappungslänge von 10 mm verwendet. Die dazu benötigten Buchenholzstücke weisen folgende Maße auf: Länge = 40mm, Breite = 20mm, Dicke = 5mm. Die Prüfkörper werden für 24h bei 23 °C und 50 % rel. Luftfeuchte mit einem Druck von 0,7 N/mm² gepresst und anschließend für 7 Tage bei 23 °C und 50 % rel. Luftfeuchte, danach 20 Tage bei 40 °C und abschließend einen Tag bei 23 °C und 50 % rel. Luftfeuchte gelagert.

Die Messung der Zugscherfestigkeit erfolgt an einer Zugprüfmaschine bei einer Vorschubgeschwindigkeit von 100 mm/min.

Die folgende Tabelle zeigt die erhaltenen Ergebnisse:

| | **Vgl. 1** | **Vgl. 2** |
|---|---|---|
| **Zugscherfestigkeit [N/mm²]** | 8,8 | 8,0 |
| **Hautbildezeit [min]** | 45 | 30 |

| | **Bsp. 1** | **Bsp. 2** | **Bsp. 3** | **Bsp. 4** |
|---|---|---|---|---|
| **Zugscherfestigkeit [N/mm²]** | 11,0 | 10,8 | 11,2 | 11,6 |
| **Hautbildezeit [min]** | 140 | 20 | 20 | 55 |

| | **Bsp. 5** | **Bsp. 6** | **Bsp. 7** | **Bsp. 8** |
|---|---|---|---|---|
| **Zugscherfestigkeit [N/mm²]** | 12,2 | 12,3 | 12,0 | 10,9 |
| **Hautbildezeit [min]** | 65 | 60 | 60 | 30 |

Die ermittelten Daten zeigen deutlich die anendungstechnische Überlegenheit der erfindungsgemäßen Beispiele gegenüber den Vergleichsbeispielen.

## Patentansprüche

1. Mit Alkoxysilangruppen modifizierte Polymere, die durch Umsetzung von
a) Polymerpolyolen oder Mischungen von Polymerpolyolen, die mindestens 5 Gew.-% darin dispergierten organischen Füllstoff enthalten, bei welchem es sich um Additionsprodukte von Toluylendiisocyanat mit Hydrazinhydrat (PHD) oder Copolymerisate von Styrol und Acrylnitril (SAN) handelt mit
b) einer isocyanatfunktionellen Alkoxysilanverbindung der allgemeinen Formel (I): 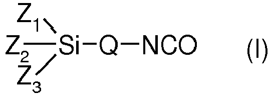 worin
Z¹, Z² und Z³ gleiche oder verschiedene C₁-C₈-Alkoxy- oder C₁-C₈-Alkylreste sind, die auch verbrückt sein können, wobei aber an jedem Si-Atom mindestens ein C₁-C₈-Alkoxyrest vorhanden sein muss,
Q ein wenigstens difunktioneller linearer oder verzweigter organischer Rest ist, bevorzugt ein Alkylenradikal mit 1 bis 8 Kohlenstoffatomen,
erhältlich sind, die bei 23 °C eine Viskosität von kleiner 20 Pa·s aufweisen, gemessen wie in der Beschreibung angegeben.

2. Verbindungen gemäß Anspruch 1 bei denen in Teil a) Polyetherpolyole mit darin dispergierten organischen Füllstoffen verwendet werden.

3. Verbindungen gemäß Anspruch 1 bei denen Teil a) mindestens 20 Gew.-% dispergierten organischen Füllstoff enthält.

4. Verbindungen gemäß Anspruch 1 bei denen Teil a) mindestens 15 Gew.-% dispergierten organischen Füllstoff enthält.

5. Alkoxysilangruppen-modifizierte Polyurethane gemäß Anspruch 1 bei denen Teil a) mindestens 10 Gew.-% dispergierten organischen Füllstoff enthält.

6. Alkoxysilangruppen-modifizierte Polyurethane gemäß Anspruch 1, **dadurch gekennzeichnet, dass** sie bei 23 °C eine Viskosität von kleiner 10 Pa·s aufweisen.

7. Alkoxysilangruppen-modifizierte Polyurethane gemäß Anspruch 1, **dadurch gekennzeichnet, dass** sie bei 23 °C eine Viskosität von kleiner 5 Pa·s aufweisen.

8. Verwendung der mit Alkoxysilangruppen modifizierten Polymere gemäß Anspruch 1 in Klebstoffen, Beschichtungen und Schäumen.

9. Schaumstoff-, Klebstoff- und Beschichtungszubereitungen enthaltend
5 Gew.-% bis 100 Gew.-% eines mit Alkoxysilangruppen modifizierten Polymers nach Anspruch 1 oder eines Gemisches aus zwei oder mehreren solcher mit Alkoxysilangruppen modifizierten Polymere,
0 Gew.-% bis 50 Gew.-% eines Weichmachers/Flammschutzmittels oder eines Gemisches aus zwei oder mehreren Weichmachern/Flammschutzmitteln
0 Gew.-% bis 95 Gew.-% eines Löse-/Treibmittels oder eines Gemisches aus zwei oder mehreren Löse-/Treibmitteln
0 Gew.-% bis 20 Gew.-% eines Feuchtigkeits-Stabilisators oder eines Gemisches aus zwei oder mehreren Feuchtigkeits-Stabilisatoren
0 Gew.-% bis 5 Gew.-% eines Alterungsschutzmittels oder eines Gemisches aus zwei oder mehreren Alterunsgschutzmitteln.
0 Gew.-% bis 5 Gew.-% eines Katalysators oder eines Gemisches aus zwei oder mehreren Katalysatoren
0 Gew.-% bis 80 Gew.-% eines Füllstoffs oder eines Gemisches aus zwei oder mehreren Füllstoffen.

10. Aus Klebstoffen gemäß Anspruch 9 erhaltene Verklebungen mit einer Zugscherfestigkeit größer 10 N/mm², gemessen wie in der Beschreibung angegeben.

11. Unter Verwendung von Klebstoffen gemäß Anspruch 10 verbundene Substrate.

## Claims

1. Polymers modified with alkoxysilane groups, which are obtainable by reaction of
a) polymer polyols or mixtures of polymer polyols,
which comprise at least 5 wt.% of organic filler dispersed therein, which comprises addition products of toluene diisocyanate with hydrazine hydrate (PHD) or copolymers of styrene and acrylonitrile (SAN)
with
b) an isocyanate-functional alkoxysilane compound of the general formula (I): 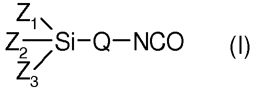 wherein
Z¹, Z² and Z³ are identical or different C₁-C₈-alkoxy or C₁-C₈-alkyl radicals, which can also be bridged, but wherein at least one C₁-C₈-alkoxy radical must be present on each Si atom,
Q is an at least difunctional linear or branched organic radical, preferably an alkylene radical having 1 to 8 carbon atoms,
which have a viscosity at 23 ºC of less than 20 Pas, measured as stated in the description.

2. Compounds according to claim 1, in which polyether polyols having organic fillers dispersed therein are used in part a).

3. Compounds according to claim 1, in which part a) comprises at least 20 wt.% of dispersed organic filler.

4. Compounds according to claim 1, in which part a) comprises at least 15 wt.% of dispersed organic filler.

5. Alkoxysilane group-modified polyurethanes according to claim 1, in which part a) comprises at least 10 wt.% of dispersed organic filler.

6. Alkoxysilane group-modified polyurethanes according to claim 1, **characterized in that** they have a viscosity at 23 ºC of less than 10 Pas.

7. Alkoxysilane group-modified polyurethanes according to claim 1, **characterized in that** they have a viscosity at 23 ºC of less than 5 Pas.

8. Use of the alkoxysilane group-modified polymers according to claim 1 in adhesives, coatings and foams.

9. Foam, adhesive and coating preparations comprising
5 wt.% to 100 wt.% of an alkoxysilane group-modified polymer according to claim 1 or of a mixture of two or more such polymers modified with alkoxysilane groups
0 wt.% to 50 wt.% of a plasticizer/flameproofing agent or of a mixture of two or more plasticizers/flameproofing agents
0 wt.% to 95 wt.% of a solvent/blowing agent or of a mixture of two or more solvents/blowing agents
0 wt.% to 20 wt.% of a moisture stabilizer or of a mixture of two or more moisture stabilizers
0 wt.% to 5 wt.% of an antiageing agent or of a mixture of two or more antiageing agents
0 wt.% to 5 wt.% of a catalyst or of a mixture of two or more catalysts
0 wt.% to 80 wt.% of a filler or of a mixture of two or more fillers.

10. Bonded products obtained from adhesives according to claim 9 having a tensile shear strength of greater than 10 N/mm², measured as stated in the description.

11. Substrates bonded using adhesives according to claim 10.

## Revendications

1. Polymères modifiés par des groupes alcoxysilane, qui peuvent être obtenus par la transformation
a) de polyols polymères ou de mélanges de polyols polymères, qui contiennent au moins 5% en poids de charge organique en dispersion, pour laquelle il s'agit de produits d'addition de diisocyanate de toluylène avec de l'hydrate d'hydrazine (PHD) ou des copolymères de styrène et d'acrylonitrile (SAN) avec
b) un composé d'alcoxysilane à fonctionnalité isocyanate de formule générale (1) : 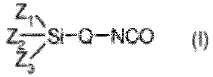
dans laquelle
Z¹, Z² et Z³ sont des radicaux C₁₋₈-alcoxyle ou C₁₋₈-alkyle identiques ou différents, qui peuvent également être reliés, mais au moins un radical C₁₋₈-alcoxyle devant être présent sur chaque atome de Si,
Q est un radical organique linéaire ou ramifié, au moins difonctionnel, préférablement est un radical alkylène comprenant 1 jusqu'à 8 atome(s) de carbone,
qui présentent une viscosité à 23°C inférieure à 20 Pa.s, mesurée comme indiqué dans la description.

2. Composés selon la revendication 1, dans lesquels des polyétherpolyols qui contiennent des charges organiques en dispersion sont utilisés dans la partie a).

3. Composés selon la revendication 1, dans lesquels la partie a) contient au moins 20% en poids de charge organique en dispersion.

4. Composés selon la revendication 1, dans lesquels la partie a) contient au moins 15% en poids de charge organique en dispersion.

5. Polyuréthanes modifiés par des groupes alcoxysilane selon la revendication 1, dans lesquels la partie a) contient au moins 10% en poids de charge organique en dispersion.

6. Polyuréthanes modifiés par des groupes alcoxysilane selon la revendication 1, **caractérisés en ce qu'**ils présentent une viscosité à 23°C inférieure à 10 Pa.s.

7. Polyuréthanes modifiés par des groupes alcoxysilane selon la revendication 1, **caractérisés en ce qu'**ils présentent une viscosité à 23°C inférieure à 5 Pa.s.

8. Utilisation des polymères modifiés par des groupes alcoxysilane selon la revendication 1 dans des adhésifs, des revêtements et des mousses.

9. Préparations de mousse, d'adhésif et de revêtement contenant
5% en poids jusqu'à 100% en poids d'un polymère modifié par des groupes alcoxysilane selon la revendication 1 ou d'un mélange de deux, ou plus, de ces polymères modifiés par des groupes alcoxysilane,
0% en poids jusqu'à 50% en poids d'un agent ignifugeant/assouplissant ou d'un mélange de deux, ou plus, agents ignifugeants/assouplissants
0% en poids jusqu'à 95% en poids d'un agent propulseur/solvant ou d'un mélange de deux, ou plus, agents propulseurs/solvants
0% en poids jusqu'à 20% en poids d'un stabilisateur d'humidité ou d'un mélange de deux, ou plus, stabilisateurs d'humidité
0% en poids jusqu'à 5% en poids d'un agent de protection contre le vieillissement ou d'un mélange de deux, ou plus, agents de protection contre le vieillissement
0% en poids jusqu'à 5% en poids d'un catalyseur ou d'un mélange de deux, ou plus, catalyseurs
0% en poids jusqu'à 80% en poids d'une charge ou d'un mélange de deux, ou plus, charges.

10. Collages obtenus avec des adhésifs selon la revendication 9 présentant une résistance à la traction et au cisaillement supérieure à 10 N/mm², mesurée comme indiqué dans la description.

11. Substrats reliés en utilisant des adhésifs selon la revendication 10.
